# EUROPEAN PATENT SPECIFICATION

(11) **EP 3 166 258 B1**
(45) Date of publication and mention of the grant of the patent: **02.01.2019**
(21) Application number: 15193751.3
(22) Date of filing: 09.11.2015
(51) Int. Cl.: H04L 12/403, H04L 12/40

(54) **SYSTEM AND METHOD FOR CONFIGURING A NETWORK FOR AN AIRCRAFT OR SPACECRAFT**
SYSTEM UND VERFAHREN ZUM KONFIGURIEREN EINES NETZWERKS FÜR EIN FLUGZEUG ODER RAUMFAHRZEUG
SYSTÈME ET PROCÉDÉ DE CONFIGURATION D'UN RÉSEAU POUR UN AÉRONEF OU UN VÉHICULE SPATIAL

(43) Date of publication of application: 10.05.2017
(73) Proprietor: Airbus Operations GmbH, 21129 Hamburg (DE)
(72) Inventor: Heitsch, Holger, 21129 Hamburg (DE); Hollander, Jens, 21129 Hamburg (DE); Kliem, Daniel, 21129 Hamburg (DE); Wagner, Martin, 21129 Hamburg (DE)
(74) Representative: Bird & Bird LLP

(56) References cited:
- EP-A1- 1 760 563
- US-A1- 2006 086 893
- US-A1- 2014 333 207

## Description

The present application relates to a network for an aircraft or spacecraft, comprising a master device and a plurality of slave devices connected in series in a daisy-chain arrangement, to an aircraft comprising such a network, and to a method of configuring such a network.

Due to its simplicity, a so-called daisy-chain topology or arrangement is used in many applications when setting up data networks. For example, such data networks are used in aircraft, such as, e.g., aircraft cabin electronic networks. In these networks it is frequently necessary to add or remove network devices or nodes to or from the network, and it is desirable to keep the reconfiguration work at a minimum.

In a daisy-chain arrangement the various network devices or nodes are connected in series such that they are arranged one after the other. Messages are transmitted along the series by forwarding the messages from network device to network device until the target network device is reached. Often, the daisy-chain arrangement comprises at one of its ends a master device and a plurality of slave devices connected to the master device. The master device transmits polling messages to the slave devices, wherein the slave devices are addressed by separate polling messages and one after the other in a defined order or sequence. This polling is repeated continuously. Each of the slave devices analyzes the received polling messages in order to determine whether it is the intended recipient of the polling message, and transmits a response message to the master device if it is the intended recipient. Otherwise, the polling message is forwarded to the next slave device, if present. Thus, each polling message starts the transmission phase of the slave device, which is the intended recipient of the respective polling message.

Due to the need to analyze the polling messages and to then generate response messages or forward the polling messages, delays occur and accumulate along the chain. Both the processing time for generating a response message and the processing time for forwarding a polling message contribute to these delays, which delays have to be taken into consideration every time when designing, setting up or reconfiguring a daisy-chain network in order to avoid collisions.

Other types of networks, e.g., having star topologies do not suffer to such an extent from delays, but have a higher wiring complexity and are, consequently, associated with higher weights due to longer data lines.

US 2006/086893 A1 discloses a system and method for communicating between serially connected electrical devices of a network. The network includes a series of electrical devices, and fiber optic connectors between electrical devices of the series of electrical devices forming a closed communication ring in which output of each electrical device is communicatively connected to input of a subsequent electrical device of the series of electrical devices.

It is an object of the present invention to provide a network having a daisy-chain arrangement and for which setting up and reconfiguring the network is particularly simple.

This object is achieved by a network having the features of claim 1, an aircraft having the features of claim 9, and a method having the features of claim 11.

According to the present invention a network for an aircraft or spacecraft is provided, which data network comprises a master device and a plurality of slave devices. The master device and the slave devices are connected in series in a daisy-chain arrangement using, e.g., one or more wires between adjacent devices. The master device is connected to a first one of the slave devices, and the remaining slave devices - up to a last one of the slave devices - are connected in series to the first slave device. Each of the slave devices has an associated identifier or address taken from a predetermined ordered sequence of identifiers and uniquely identifying the respective slave device among the plurality of slave devices. For example, the identifiers may be numbers.

The master device is adapted to transmit periodically, i.e., in predetermined time intervals, polling data packets in a downstream direction along the series of slave devices. Each of the polling data packets includes one and only one identifier and, in particular, the identifier of one and only one of the slave devices, and may optionally also include user data for the slave device addressed by the identifier. However, as will be explained below it may also be preferable if some of the polling data packets include a predefined identifier which is not associated with any of the slave devices. The master device transmits the polling data packets in successive sequences, wherein each of these sequences of polling data packets includes for each of the slave devices one and only one polling data packet, i.e., one and only one polling data packet including the identifier of the respective slave device. Further, each of the sequences of polling data packets includes the polling data packets in the order defined by the predetermined sequence of identifiers, so that the slave devices are polled in the order corresponding to the order of the identifiers, which is typically not the order of the slave devices along the chain. Each of the polling data packets is preferably transmitted in another time slot. Further, successive sequences of polling data packets are preferably transmitted immediately after each other, so that the periodicity of the transmission of polling data packets is maintained between the sequences, i.e., the same predetermined polling time interval exists between each two successive polling data packets within a sequence and between the last polling data packet of a one sequence and the first polling data packet of the next sequence.

Moreover, each of the slave devices comprises a first data interface by means of which it is connected - depending on whether it is the first slave device or another slave device in the series of slave devices - to the master device or to an adjacent slave device in an upstream direction, a second data interface by means of which it is connected to an adjacent slave device in the downstream direction (if present, i.e., if it is not already the last slave device), and a programmable or non-programmable processing unit connected to the first and second data interfaces. Each of the first and second data interfaces is a bidirectional or preferably full-duplex data interface allowing input of data to and output of data from the respective slave device. The first and second data interfaces preferably comprise one or more respective terminals to which one or more wire can be coupled.

The processing unit is adapted to compare, for each polling data packet received on the first data interface, the identifier of the slave device to which the respective processing unit belongs with the identifier included in the respective polling data packet. If it is determined that the two identifiers match, the processing unit outputs on the first data interface a response data packet, which may be generated by the processing unit or another component of the slave device, to the master device, i.e., along the sequence of slave devices in the direction towards the master device. Further, the polling data packet is preferably output on the second data interface. In any case, if the two identifiers do not match the polling data packet is output on the second data interface.

The processing unit is further adapted to forward response data packets received on the second data interface to the first data interface, i.e., the response data packets received from downstream slave devices are forwarded towards the master device.

The processing unit of each of the slave devices comprises an adjustable time delay element which is adapted to delay the output of the response data packets by an adjustable delay period, so that the output of each response data packet output by the respective slave device in response to receipt of a polling data packet having an identifier matching the identifier of the respective slave device is delayed. In other words, the timing of the output of the response data packets by a slave device is determined by the usual processing delay and by the adjustable delay period. It should be noted that the delay is not applied to response data packets received by a slave device on its second data interface from a downstream slave device and forwarded to the first data interface.

For each of the slave devices the delay period is set to a value which depends on the relative position of the respective slave device in the daisy-chain arrangement with respect to the remaining slave devices of the daisy-chain arrangement, but is preferably independent of the identifier of the slave device. The dependence between the value and the relative position is such that the delay period continuously decreases from slave device to slave device starting from the first slave device and ending at the last slave device.

It has been recognized by the inventors that by configuring the slave devices in the above manner the set-up and reconfiguration of a network having a daisy-chain arrangement is greatly simplified. In particular, it is advantageously possible to arbitrarily order the slave devices in the series of slave devices, independent of their identifiers, because any negative effect of a particular order can be eliminated by a suitable choice of the delay periods of the slave devices. This lowers installation restrictions both at the time of setting up a network for the first time and at times of reconfiguring an existing network, e.g., by adding another slave device. In the latter case it is advantageously possible to add it at an arbitrary location, e.g., as the first slave device connected to the master device, without having to take into consideration the identifiers of the new and existing slave devices. In particular, it is not necessary to reassign identifiers to slave devices depending on the order to the slave devices along the chain, i.e., the identifiers are fixedly assigned to the slave devices. Moreover, it is easily possible to increase the upstream bandwidth, i.e., the proportion of the total time available for the slave devices to transmit data to the master controller by suitably shifting the response time of the individual slave devices. The resulting reduction of idle times also increases power and cost efficiency.

In a preferred embodiment the time delay element of each of the slave devices includes a buffer memory. The processing unit is then adapted to buffer the response data packet in the buffer memory for the respective delay period. The buffering time may be controlled by, e.g., a timer included in or associated with the processing unit.

In an alternative preferred embodiment the time delay element of each of the slave devices is adapted to delay generation of the response data packet by the processing unit by the respective delay period.

Generally, the time delay element may be a physical element or a function implemented in the processing unit.

In a preferred embodiment the processing unit of each of the slave devices is adapted to receive a measure of the relative position of the respective slave device and to automatically determine and set the adjustable delay period as a predetermined function of the received measure. For example, the measure may be received by manual input by an operator or by control data packets transmitted by the master device or another network entity.

However, it is particularly preferred if the slave devices are operable to automatically determine the measure, such as, e.g., the relative position itself. In a preferred embodiment the processing unit of each of the slave devices is adapted to measure the time periods between outputting the polling data packets on the second data interface and receiving the corresponding response data packets, to determine the maximum measured time period and to automatically set the adjustable delay period based on the determined maximum. Due to the fact that the maximum measured time period depends on the number of slave devices between the slave device at issue and the last slave device, i.e., the number of slave devices following the slave device at issue, the maximum measured time period is a measure of the relative position of the respective slave device in the series of slave devices. This measure is particularly simple to determine autonomously by a slave device. Preferably, the processing unit is adapted to set the adjustable delay period to the determined maximum time period, but it may also be advantageous to set it to a higher value, e.g., to a slightly higher value in order to account for possible jitter. Preferably, the above process is carried out continuously or intermittently in order to be able to immediately react to the addition of a slave device, the removal of a slave device, or a malfunction of a slave device. In that case, the slave devices are preferably constructed such that they include a bypass circuit which is activated in case of a malfunction.

In this embodiment it is further preferred if the processing unit of each of the slave devices is adapted to compare the determined delay period with a predefined maximum delay period, and to set the adjustable delay period to the predefined maximum delay period if the determined delay period exceeds the predefined maximum delay period. For example, the predefined maximum delay period may correspond to the time period between successive polling data packets, or may be selected based as a function of a maximum number of slave devices chosen at design time and the time period between successive polling data packets. In this manner it can be prevented that an indefinite delay period is set in the case of an error in the downstream transmission of polling data packets and/or the upstream transmission of the response data packets. The predefined maximum delay period determines the maximum possible number of slave devices, because the maximum response time measured by the slave devices increases when the number of slave devices increases, and may be suitably set at design time. It is particularly preferred if the predefined maximum delay period is smaller than the time interval between successive polling data packets in the sequences of polling data packets.

In a preferred embodiment the processing unit of each of the slave devices is adapted to set the delay period to zero if it is determined on the basis of the measure that the slave device is the last slave device in the series of slave devices.

In a preferred embodiment each sequence of polling data packets includes at the end or at the beginning thereof a special polling data packet including a predefined identifier, which is included in the sequence of identifiers and is not associated with any of the slave devices. The processing unit of each of the slave devices is then adapted to identify the special polling data packets upon receipt on the first data interface, to forward them to the second data interface, but to not output a response data packet. As will be described in more detail below, such special polling data packets may be suitable to prevent collisions of response data packets transmitted by different slave devices in the upstream direction.

In a preferred embodiment the processing unit of each of the slave devices comprises or is a field programmable gate array (FPGA) .

The network according to each of the above embodiments may be advantageously part of an aircraft or spacecraft. For example, it can constitute or be part of the aircraft cabin electronic network.

As already explained above, the network having the above configuration and constructions greatly simplifies configuring the network. Accordingly, a method of configuring a network for an aircraft or spacecraft is provided, which comprises providing a network according to any of the above-described embodiments, adding a further slave device to the daisy-chain arrangement at an arbitrary position in the series of slave devices, and setting, for each of the slave devices, the delay period to a value depending on the relative position of the respective slave device in the daisy-chain arrangement with respect to the remaining slave devices of the daisy-chain arrangement, such that the delay period continuously decreases from slave device to slave device starting from the first slave device and ending at the last slave device. The further slave device is of the same above-described construction and configuration as the slave devices already present in the daisy-chain arrangement. In particular, the further slave device has an associated identifier taken from the same predetermined ordered sequence of identifiers and uniquely identifying the further slave device among the plurality of slave devices after having added it to the daisy-chain arrangement.

Further, the present invention also provides a method of transmitting data comprising the steps of providing a network having the features of any of the above-described embodiments and of carrying out the various steps described in detail above.

In the following an exemplary embodiment of the invention will be described in more detail with reference to the drawings.
Figurer 1a shows a schematic block diagram of a daisy-chain network according to the present invention.
Figure 1b shows a schematic block diagram of the daisy-chain network of Figure 1a after changing the order of the slave devices.
Figure 2a schematically shows a timing diagram of data transmission in the network of Figure 1a with all adjustable delay periods set to zero.
Figure 2b schematically shows a further timing diagram of data transmission in the network of Figure 1a with all adjustable delay periods set to zero, but with a special polling data packet being transmitted between successive sequences of polling data packets.
Figure 3a schematically shows a timing diagram of data transmission in the network of Figure 1b with all adjustable delay periods set to zero, and with a special polling data packet being transmitted between successive sequences of polling data packets, as in the case of Figure 2a.
Figure 3b schematically shows a timing diagram of data transmission in the network of Figure 1b with all adjustable delay periods set to zero, and with a special polling data packet being transmitted between successive sequences of polling data packets, as in the case of Figure 3a, but with the adjustable delay periods set to non-zero values in accordance with an embodiment of the invention.
Figure 4 shows a schematic block diagram of a slave device of the networks of Figures 1a and 1b.
Figure 5 is a flow diagram of a method for configuring a network.

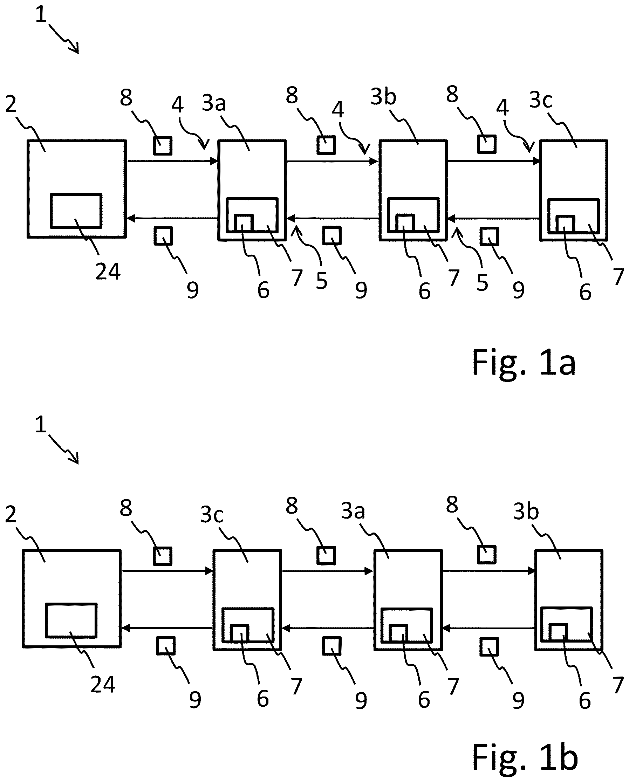

The network 1 shown in Figure 1a comprises a master device 2 and a plurality of three slave devices 3a, 3b, 3c. The three slave devices 3a, 3b, 3c are connected in series with the master device 2, such that the slave device 3a is directly connected to the master device 2, the slave device 3b is connected to the slave device 3a, and the slave device 3c is in turn connected to the slave device 3b. The four devices 2, 3a, 3b, 3c are, thus, connected in series in a daisy-chain arrangement with the master device 2 at the head of the arrangement.

Each of the slave devices 3a-3c comprises a first data interface 4 and a second data interface 5, by means of which it is coupled to the adjacent upstream device and the adjacent downstream device, respectively, if available. The downstream direction is the direction of data transmitted by the master device along the daisy-chain arrangement in the direction towards the last slave device 3c, and the upstream direction is the direction from the slave devices towards the master device 2. The slave devices 3a-3c further each include a processing unit 6 which, in turn, comprises a time delay element 7. The processing unit 6 is connected to the first and second data interfaces 4, 5 of the respective slave device 3a-3c.

Moreover, each of the slave devices 3a-3c has associated therewith a identifier 10 in the form of, e.g., an integer number. The master device 2, which comprises a processing or control unit 24 adapted to enable it to carry out the various described steps and functions, periodically transmits polling data packets 8, each including an identifier 10 of one of the slave devices 3a-3c, in order to successively poll one after the other the slave devices 2 in the order determined by their identifiers 10. The processing unit 6 of each of the slave devices 3a-3c is adapted to determine whether a received polling data packet 8 includes the identifier 10 of the respective slave device 3a-3c, and to forward the polling data packet 8 to the next slave device 3a-3c if the identifiers do not match. On the other hand, if they match the processing unit 6 generates a response data packet 9 and transmit it via its first data interface 4 towards the master device 2. The response data packets 9 are forwarded from slave device to slave device to the master device 2 in a manner similar to the manner of forwarding the polling data packets 8. It should be noted that the polling data packets 8 may also be used to transport actual user data from the master device 2 to the slave devices 3a, 3b, 3c. In that case, the arrows representing the polling data packets 8 would have to have a larger width than shown in the drawings, depending on the amount of data transported.

Figure 1b shows the same network after changing the order of the slave devices 3a-3c.

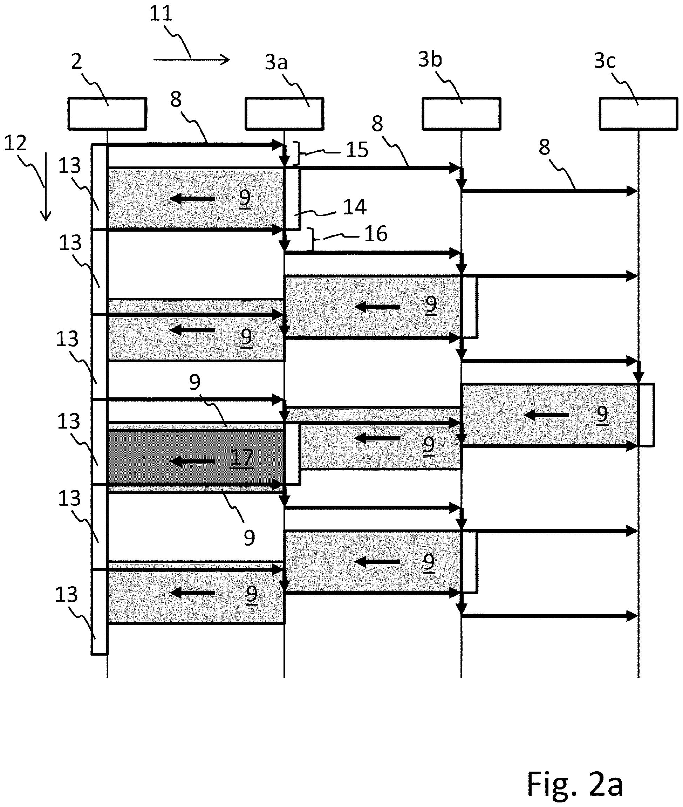

In Figure 2a a timing diagram is shown, in which the horizontal axis 11 indicates the position of the master device 2 and the slave devices 3a-3c in the daisy-chain arrangement, and the vertical axis 12 is the time axis. As indicated in Figure 2a, the time axis 12 is divided into a plurality of successive time slots 13, at the beginning of each of which the master device 2 transmits a polling data packet 8 along the chain. The first polling data packet includes the identifier 10 of the slave device 3a (the identifier in this example is "1"), the second polling data packet includes the identifier 10 of the slave device 3b (the identifier in this example is "2"), the third polling data packet includes the identifier 10 of the slave device 3c (the identifier in this example is "3"), and then the sequence is repeated for the next polling data packets.

Consequently, the first polling data packet 8 is received by the slave device 3a, which recognizes that it is addressed by the first polling data packet 8 and, therefore, generates and transmits a response data packet 9 over a time period 14, which is smaller than the corresponding time slot 13. Due to the processing necessary for the slave device 3a to recognize the first polling data packet 8 and to generate the response data packet 9, the transmission of the response data packet 9 is delayed by a processing delay period 15. Further, the first polling data packet 8 is forwarded to the next slave device 3b in the manner described below for the second data packet 8 at the first slave device 3a.

The second polling data packet 8 is likewise received by the slave device 3a, which recognizes, however, that it is addressed by the second polling data packet 8 and, therefore, does not generate and transmit a response data packet 9. Rather, the second polling data packet 8 is forwarded to the slave device 3b, which is the next slave device in the series of slave devices 3a-3c. Due to the processing necessary for the slave device 3a to recognize the second polling data packet 8 and to effect forwarding, the transmission of the second polling data packet 8 by the slave device 3a is delayed by a hop delay period 16, which, in the example shown is identical to the processing delay 15. The same hop delay 16 also occurs in the opposite direction when forwarding the response data packets 9 by a slave device 3a-3c.

Similar considerations apply to all subsequent polling data packets 8, so that delays accumulate along the chain and response data packets 9 have a travel time - with respect to the moment in time the polling data packet 8 initiating the response data packet 9 was received at the respective slave device 3a-3c - which is higher the further down the chain the slave device 3a-3c is located, which generated and transmitted the respective response data packet 9.

Therefore, as illustrated in Figure 2a, the response data packet 9 transmitted by the slave device 3a in response to the fourth polling data packet 8 collides with the response data packet 9 transmitted earlier by the slave device 3c in response to the third polling data packet 8. The collision zone 17 is indicated by dark shading.

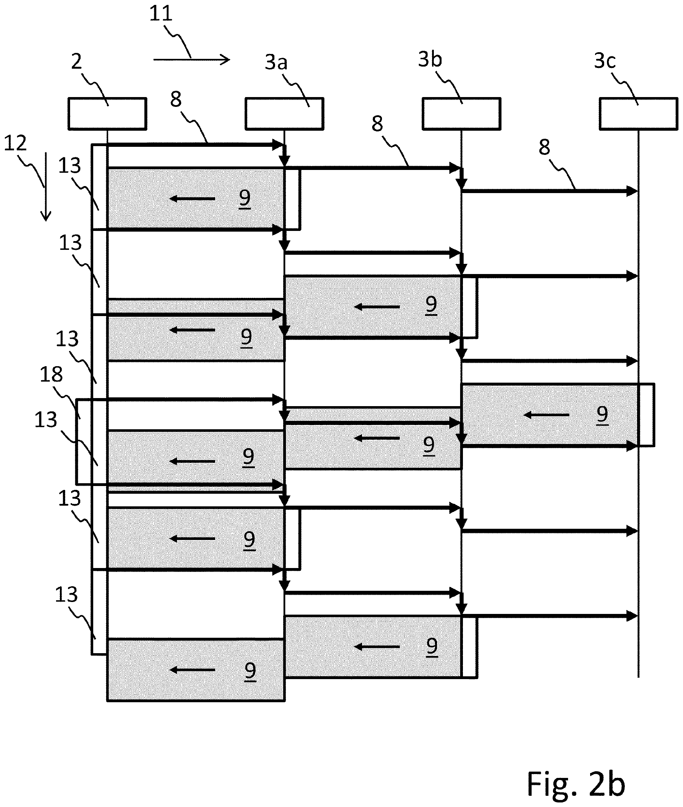

As illustrated in Figure 2b, the collision 17 can be avoided in this example by adding a special time slot 18, at the beginning of which a polling data packet 8 addressed to none of the slave devices 3a-3c is transmitted, so that none of the slave devices 3a-3c respond thereto. For example the special polling data packet 8 may include the identifier "0".

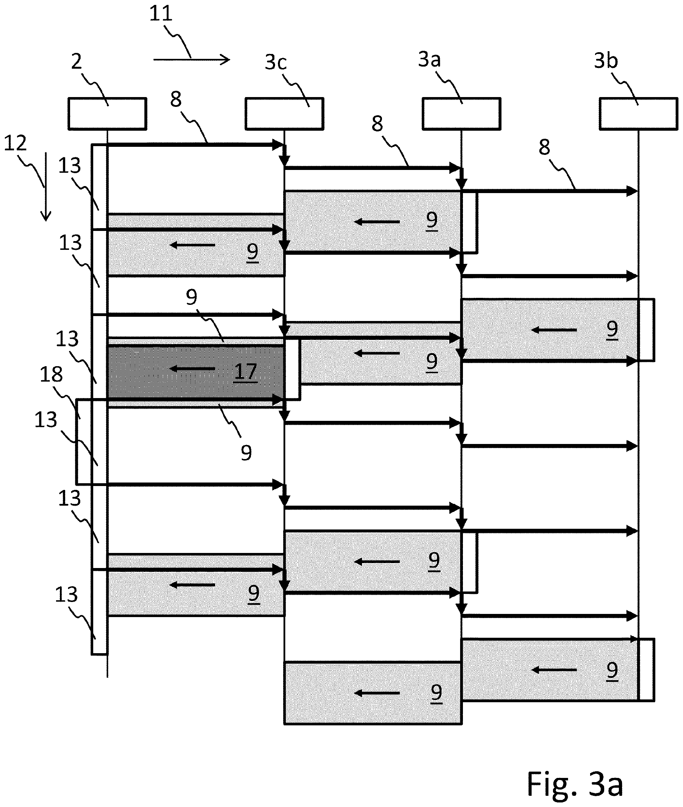

However, as illustrated in Figure 3a, the special time slot 18 does not serve to prevent a collision 17 if the order of the slave devices 3a-3c is changed to the one shown in Figure 1b.

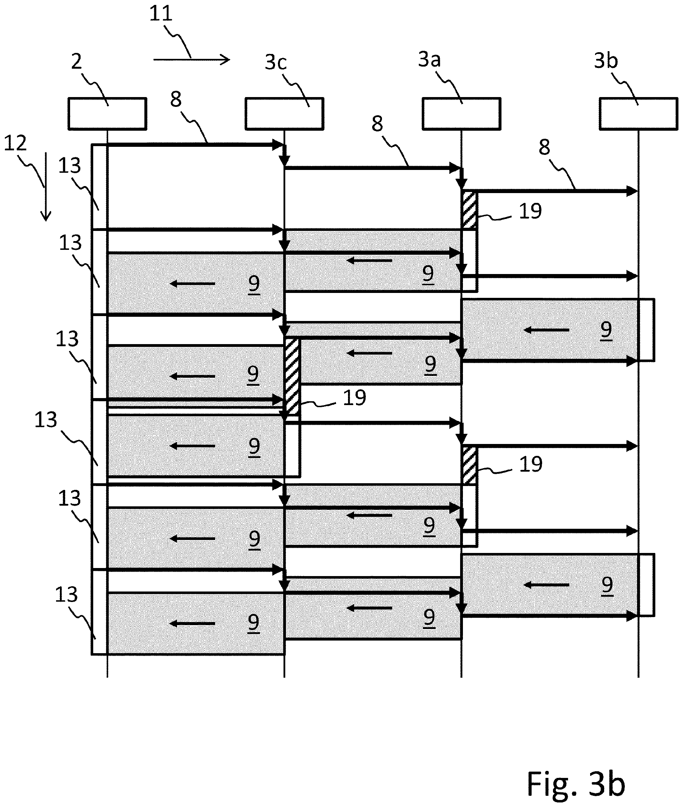

Therefore, the adjustable delay element 7 included in each of the processing units 6 is adjusted for each of the slave devices 3a-3c such that before transmitting the generated response data packet 9 the processing unit 6 waits for an adjustable delay period 19. The adjustment is made in such a manner that for the first slave device 3c in the daisy-chain arrangement when viewed from the master device 2 the largest delay period 19 is chosen, and the delay period 19 continuously decreases along the chain until it is zero for the last slave device 3b. As can be seen in Figure 3b, any collision is prevented, in the example illustrated even without providing for a special time slot. Further, the use of the available upstream bandwidth is considerably increased as compared to Figures 2a, 2b and 3a, because the upstream transmissions are shifted in time to be spaced closer to each other.

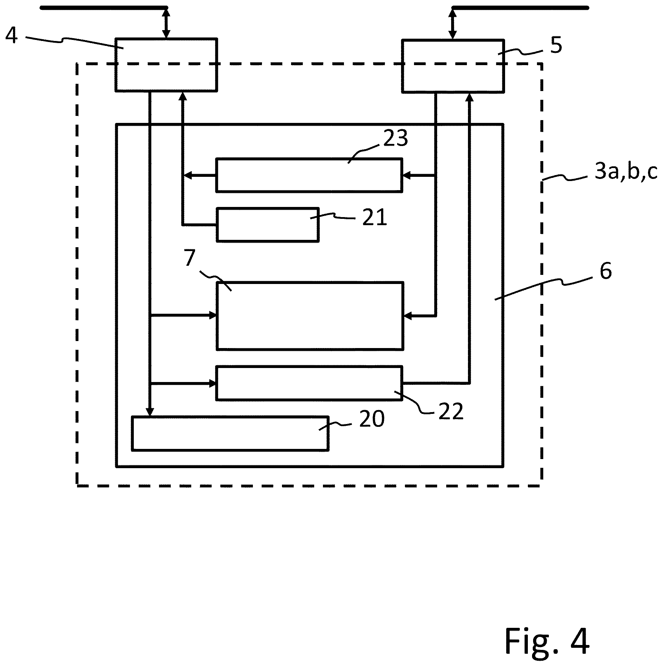

Figure 4 shows a schematic block diagram of an embodiment of a slave device 3a, 3b, 3c including the processing unit 6 implemented as a field programmable gate array (FPGA), and comprising the first data interface 4 and the second data interface 5, by means of which it is coupled to the chain in the upstream direction and the downstream direction, respectively, i.e., to one or more data lines extending between the respective slave device 3a, 3b, 3c and the immediately adjacent device or devices 2, 3a, 3b, 3c.

The processing unit 6 includes a receiving element 20 adapted to receive data from the chain and a transmitting element 21 adapted to transmit data on the chain. Received polling data packets 8 not addressed to the slave device 3a, 3b, 3c are simply forwarded in the downstream direction by a downstream forwarding element 22, and response data packets 9 received from downstream slave devices are forwarded in the upstream direction by an upstream forwarding element 23. Further, the time delay element 7, which is included in this example in the processing unit 6, determines for each received polling data packet 8 not addressed to the slave device 3a, 3b, 3c and forwarded in the downstream direction whether a corresponding response data packet 9 is received and what is the delay between forwarding the polling data packet 8 and receiving the response data packet 9. The time delay element 7 is adapted to determine the maximum delay, to set the delay period 19 as described above, and to control the transmitting element 21 to delay transmission of response data packets 9 generated by the slave device 3a, 3b, 3c by the set delay period 19.

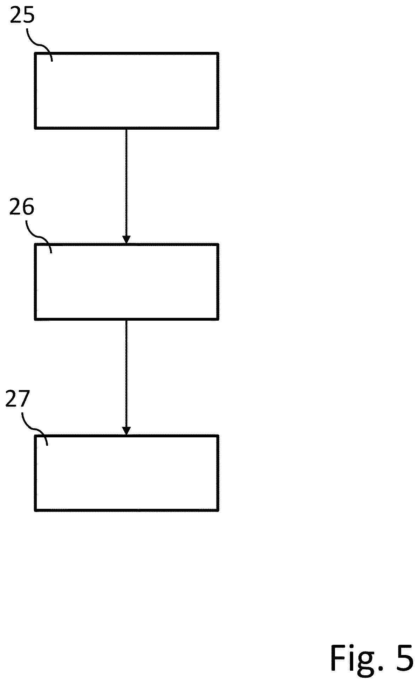

Figure 5 is a flow diagram schematically illustrating a method of configuring a network for an aircraft or spacecraft. In step 25 a network 1 having the above-described configuration is provided. In step 26 a further slave device (3a, 3b, 3c) is added to the daisy-chain arrangement at an arbitrary position in the series of slave devices (3a, 3b, 3c). The further slave device (3a, 3b, 3c) is of the same above-described construction and configuration as the slave devices (3a, 3b, 3c) already present in the daisy-chain arrangement. In particular, the further slave device (3a, 3b, 3c) has an associated identifier taken from the same predetermined ordered sequence of identifiers and uniquely identifying the further slave device (3a, 3b, 3c) among the plurality of slave devices (3a, 3b, 3c), including the ones already added it to the daisy-chain arrangement. In step 27, for each of the slave devices (3a, 3b, 3c), the delay period (19) is set in the above-described manner to a value depending on the relative position of the respective slave device (3a, 3b, 3c) in the daisy-chain arrangement with respect to the remaining slave devices (3a, 3b, 3c) of the daisy-chain arrangement, such that the delay period (19) continuously decreases from slave device (3a, 3b, 3c) to slave device (3a, 3b, 3c) starting from the first slave device (3a, 3b, 3c) and ending at the last slave device (3a, 3b, 3c).

## Claims

1. A network for an aircraft or spacecraft, comprising:
a master device and a plurality of slave devices (3a, 3b, 3c) connected in series in a daisy-chain arrangement, wherein the master device (2) is connected to a first one of the slave devices (3a, 3b, 3c), to which the remaining slave devices (3a, 3b, 3c) are connected in series up to a last one of the slave devices (3a, 3b, 3c), and wherein each of the slave devices (3a, 3b, 3c) has an associated identifier taken from a predetermined ordered sequence of identifiers and uniquely identifying the respective slave device (3a, 3b, 3c) among the plurality of slave devices (3a, 3b, 3c),
wherein the master device (2) is adapted to transmit periodically polling data packets (8) in a downstream direction along the series of slave devices (3a, 3b, 3c), each of the polling data packets (8) including one and only one identifier, wherein the master device (2) transmits the polling data packets (8) in successive sequences, each sequence of polling data packets (8) including for each of the slave devices (3a, 3b, 3c) one and only one polling data packet (8), which includes the identifier of the respective slave device (3a, 3b, 3c), and each sequence of polling data packets (8) including the polling data packets (8) in the order defined by the predetermined sequence of identifiers, and
each of the slave devices (3a, 3b, 3c) comprises a first data interface (4) by means of which it is connected to the master device (2) or to an adjacent slave device (3a, 3b, 3c) in an upstream direction, a second data interface (5) by means of which it is connected to an adjacent slave device (3a, 3b, 3c) in the downstream direction, and a processing unit (6) connected to the first and second data interfaces (4, 5) and adapted to
- compare for each polling data packet (8) received on the first data interface (4) the identifier of the respective slave device (3a, 3b, 3c) with the identifier included in the polling data packet (8), and output on the first data interface (4) a response data packet (9) to the master device (2) if the two identifiers match, and forward the polling data packet (8) to the second interface (5) at least if the two identifiers do not match, and
- forward response data packets (9) received on the second data interface (5) to the first data interface (4),
**characterized in that** the processing unit (6) of each of the slave devices (3a, 3b, 3c) comprises an adjustable time delay element (7) which is adapted to delay the output of the response data packets (9) by an adjustable delay period (19), wherein the delay is not applied to response data packets (9) received by a slave device (3a, 3b, 3c) on its second data interface (5) from a downstream slave device (3a, 3b, 3c) and forwarded to the first data interface (4),
wherein for each of the slave devices (3a, 3b, 3c) the delay period (19) is set to a value depending on the relative position of the respective slave device (3a, 3b, 3c) in the daisy-chain arrangement with respect to the remaining slave devices (3a, 3b, 3c) of the daisy-chain arrangement, such that the delay period (19) continuously decreases from slave device (3a, 3b, 3c) to slave device (3a, 3b, 3c) starting from the first slave device (3a, 3b, 3c) and ending at the last slave device (3a, 3b, 3c).

2. The network according to claim 1, wherein
the time delay element (7) of each of the slave devices (3a, 3b, 3c) includes a buffer memory, wherein the processing unit (6) is adapted to buffer the response data packet (9) in the buffer memory for the respective delay period (19), or
the time delay element (7) of each of the slave devices (3a, 3b, 3c) is adapted to delay generation of the response data packet (9) by the processing unit (6) by the respective delay period (19).

3. The network according to any of the preceding claims, wherein the processing unit (6) of each of the slave devices (3a, 3b, 3c) is adapted to receive a measure of the relative position of the respective slave device (3a, 3b, 3c) and to automatically determine and set the adjustable delay period (19) as a predetermined function of the received measure.

4. The network according to claim 3, wherein the processing unit (6) of each of the slave devices (3a, 3b, 3c) is adapted to measure the time periods between outputting the polling data packets (8) on the second data interface (5) and receiving the corresponding response data packets (9), to determine the maximum measured time period and to automatically set the adjustable delay period (19) based on the determined maximum.

5. The network according to claim 4, wherein the processing unit (6) is adapted to set the adjustable delay period (19) to the determined maximum time period.

6. The network according to any of claims 3 to 5, wherein the processing unit (6) of each of the slave devices (3a, 3b, 3c) is adapted to compare the determined delay period (19) with a predefined maximum delay period, and to set the adjustable delay period (19) to the predefined maximum delay period if the determined (19) exceeds the predefined maximum delay period.

7. The network according to any of the preceding claims, wherein the processing unit (6) of each of the slave devices (3a, 3b, 3c) is adapted to set the delay period (19) to zero if it is determined on the basis of the measure that the slave device (3a, 3b, 3c) is the last slave device (3a, 3b, 3c) in the series of slave devices (3a, 3b, 3c).

8. The network according to any of the preceding claims, wherein each sequence of polling data packets (8) includes at the end or at the beginning thereof a special polling data packet (8) including a predefined identifier, which is included in the sequence of identifiers and is not associated with any of the slave devices (3a, 3b, 3c), and wherein the processing unit (6) of each of the slave devices (3a, 3b, 3c) is adapted to identify the special polling data packets (8) upon receipt on the first data interface (4), and to forward them to the second data interface (5).

9. The network according to any of the preceding claims, wherein the processing unit (6) of each of the slave devices (3a, 3b, 3c) comprises or is a field programmable gate array, FPGA.

10. An aircraft or spacecraft comprising a network according to any of the preceding claims.

11. A method of configuring the network according to any one of claims 1 to 9, the method comprising:
- adding a further slave device (3a, 3b, 3c) to the daisy-chain arrangement at an arbitrary position in the series of slave devices (3a, 3b, 3c),
- delaying, by each of the slave devices (3a, 3b, 3c), the output of the response data packets (9) by an adjustable delay period (19), wherein the delay is not applied to response data packets (9) received by a slave device (3a, 3b, 3c) on its second data interface (5) from a downstream slave device (3a, 3b, 3c) and forwarded to the first data interface (4), and
- setting, for each of the slave devices (3a, 3b, 3c), the delay period (19) to a value depending on the relative position of the respective slave device (3a, 3b, 3c) in the daisy-chain arrangement with respect to the remaining slave devices (3a, 3b, 3c) of the daisy-chain arrangement, such that the delay period (19) continuously decreases from slave device (3a, 3b, 3c) to slave device (3a, 3b, 3c) starting from the first slave device (3a, 3b, 3c) and ending at the last slave device (3a, 3b, 3c).

## Patentansprüche

1. Netzwerk für ein Flugzeug oder Raumfahrzeug, umfassend:
eine Master-Vorrichtung und mehrere Slave-Vorrichtungen (3a, 3b, 3c), die in einer Verkettungsanordnung in Reihe geschaltet sind, wobei die Master-Vorrichtung (2) mit einer ersten der Slave-Vorrichtungen (3a, 3b, 3c) verbunden ist, mit der die übrigen Slave-Vorrichtungen (3a, 3b, 3c) in Reihe geschaltet sind, bis zu einer letzten der Slave-Vorrichtungen (3a, 3b, 3c), und wobei jede der Slave-Vorrichtungen (3a, 3b, 3c) eine zugeordnete Kennung aufweist, die einer vorbestimmten geordneten Sequenz von Kennungen entnommen wird und die jeweilige Slave-Vorrichtung (3a, 3b, 3c) unter den mehreren Slave-Vorrichtungen (3a, 3b, 3c) eindeutig identifiziert,
wobei die Master-Vorrichtung (2) ausgelegt ist zum periodischen Senden von Abfragedatenpaketen (8) in einer Signalabwärtsrichtung entlang der Reihe von Slave-Vorrichtungen (3a, 3b, 3c), wobei jedes der Abfragedatenpakete (8) eine und nur eine Kennung umfasst, wobei die Master-Vorrichtung (2) die Abfragedatenpakete (8) in sukzessiven Sequenzen sendet, wobei jede Sequenz von Abfragedatenpaketen (8) für jede der Slave-Vorrichtungen (3a, 3b, 3c) ein und nur ein Abfragedatenpaket (8) umfasst, das die Kennung der jeweiligen Slave-Vorrichtung (3a, 3b, 3c) umfasst, und jede Sequenz von Abfragedatenpaketen (8) die Abfragedatenpakete (8) in der durch die vorbestimmte Sequenz von Kennungen definierten Reihenfolge umfasst und jede der Slave-Vorrichtungen (3a, 3b, 3c) eine erste Datenschnittstelle (4), mittels derer sie mit der Master-Vorrichtung (2) oder mit einer angrenzenden Slave-Vorrichtung (3a, 3b, 3c) in einer Signalaufwärtsrichtung verbunden ist, und eine zweite Datenschnittstelle (5) mittels derer sie mit einer angrenzenden Slave-Vorrichtung (3a, 3b, 3c) in der Signalabwärtsrichtung verbunden ist, und eine Verarbeitungseinheit (6), die mit der ersten und zweiten Datenschnittstelle (4, 5) verbunden ist, umfasst, die ausgelegt ist zum
- für jedes auf der ersten Datenschnittstelle (4) empfangene Abfragedatenpaket (8) Vergleichen der Kennung der jeweiligen Slave-Vorrichtung (3a, 3b, 3c) mit der in dem Abfragedatenpaket (8) enthaltenen Kennung und Ausgeben eines Antwortdatenpakets (9) an die Master-Vorrichtung (2) auf der ersten Datenschnittstelle (4), wenn die zwei Kennungen übereinstimmen, und Weiterleiten des Abfragedatenpakets (8) zu der zweiten Schnittstelle (5), mindestens wenn die zwei Kennungen nicht übereinstimmen, und
- Weiterleiten von auf der zweiten Datenschnittstelle (5) empfangenen Antwortdatenpaketen (9) zu der ersten Datenschnittstelle (4),
**dadurch gekennzeichnet, dass** die Verarbeitungseinheit (6) jeder der Slave-Vorrichtungen (3a, 3b, 3c) ein einstellbares Zeitverzögerungselement (7) umfasst, das ausgelegt ist zum Verzögern der Ausgabe der Antwortdatenpakete (9) um einen einstellbaren Verzögerungszeitraum (19), wobei die Verzögerung nicht auf Antwortdatenpakete (9) angewandt wird, die durch eine Slave-Vorrichtung (3a, 3b, 3c) auf ihrer zweiten Datenschnittstelle (5) von einer Signalabwärts-Slave-Vorrichtung (3a, 3b, 3c) empfangen und zu der ersten Datenschnittstelle (4) weitergeleitet werden,
wobei für jede der Slave-Vorrichtungen (3a, 3b, 3c) der Verzögerungszeitraum (19) auf einen Wert gesetzt wird, der von der relativen Position der jeweiligen Slave-Vorrichtung (3a, 3b, 3c) in der Verkettungsanordnung mit Bezug auf die übrigen Slave-Vorrichtungen (3a, 3b, 3c) der Verkettungsanordnung abhängt, dergestalt, dass der Verzögerungszeitraum (19) von Slave-Vorrichtung (3a, 3b, 3c) zu Slave-Vorrichtung (3a, 3b, 3c) beginnend von der ersten Slave-Vorrichtung (3a, 3b, 3c) und endend bei der letzten Slave-Vorrichtung (3a, 3b, 3c) kontinuierlich abnimmt.

2. Netzwerk nach Anspruch 1, wobei
das Zeitverzögerungselement (7) jeder der Slave-Vorrichtungen (3a, 3b, 3c) einen Pufferspeicher umfasst, wobei die Verarbeitungseinheit (6) ausgelegt ist zum Puffern des Antwortdatenpakets (9) in dem Pufferspeicher für den jeweiligen Verzögerungszeitraum (19) oder
das Zeitverzögerungselement (7) jeder der Slave-Vorrichtungen (3a, 3b, 3c) ausgelegt ist zum Verzögern der Erzeugung des Antwortdatenpakets (9) durch die Verarbeitungseinheit (6) um den jeweiligen Verzögerungszeitraum (19).

3. Netzwerk nach einem der vorhergehenden Ansprüche, wobei die Verarbeitungseinheit (6) jeder der Slave-Vorrichtungen (3a, 3b, 3c) ausgelegt ist zum Empfangen eines Maßes für die relative Position der jeweiligen Slave-Vorrichtung (3a, 3b, 3c) und zum automatischen Bestimmen und Setzen des einstellbaren Verzögerungszeitraums (19) als vorbestimmte Funktion des empfangenen Maßes.

4. Netzwerk nach Anspruch 3, wobei die Verarbeitungseinheit (6) jeder der Slave-Vorrichtungen (3a, 3b, 3c) ausgelegt ist zum Messen der Zeiträume zwischen dem Ausgeben der Abfragedatenpakete (8) auf der zweiten Datenschnittstelle (5) und Empfangen der entsprechenden Antwortdatenpakete (9), um den maximalen gemessenen Zeitraum zu bestimmen und automatisch den einstellbaren Verzögerungszeitraum (19) auf der Basis des bestimmten Maximums zu setzen.

5. Netzwerk nach Anspruch 4, wobei die Verarbeitungseinheit (6) ausgelegt ist zum Setzen des einstellbaren Verzögerungszeitraums (19) auf den bestimmten maximalen Zeitraum.

6. Netzwerk nach einem der Ansprüche 3 bis 5, wobei die Verarbeitungseinheit (6) jeder der Slave-Vorrichtungen (3a, 3b, 3c) ausgelegt ist zum Vergleichen des bestimmten Verzögerungszeitraums (19) mit einem vordefinierten maximalen Verzögerungszeitraum und zum Setzen des einstellbaren Verzögerungszeitraums (19) auf den vordefinierten maximalen Verzögerungszeitraum, wenn der bestimmte (19) den vordefinierten maximalen Verzögerungszeitraum überschreitet.

7. Netzwerk nach einem der vorhergehenden Ansprüche, wobei die Verarbeitungseinheit (6) jeder der Slave-Vorrichtungen (3a, 3b, 3c) ausgelegt ist zum Setzen des Verzögerungszeitraums (19) auf null, wenn auf der Basis des Maßes bestimmt wird, dass die Slave-Vorrichtung (3a, 3b, 3c) die letzte Slave-Vorrichtung (3a, 3b, 3c) in der Reihe von Slave-Vorrichtungen (3a, 3b, 3c) ist.

8. Netzwerk nach einem der vorhergehenden Ansprüche, wobei jede Sequenz von Abfragedatenpaketen (8) am Ende oder am Anfang davon ein spezielles Abfragedatenpaket (8) umfasst, das eine vordefinierte Kennung umfasst, die in der Sequenz von Kennungen enthalten ist und keinen der Slave-Vorrichtungen (3a, 3b, 3c) zugeordnet ist, und wobei die Verarbeitungseinheit (6) jeder der Slave-Vorrichtungen (3a, 3b, 3c) ausgelegt ist zum Identifizieren der speziellen Abfragedatenpakete (8) bei Empfang auf der ersten Datenschnittstelle (4) und zum Weiterleiten dieser zu der zweiten Datenschnittstelle (5).

9. Netzwerk nach einem der vorhergehenden Ansprüche, wobei die Verarbeitungseinheit (6) jeder der Slave-Vorrichtungen (3a, 3b, 3c) ein Field Programmable Gate Array bzw. FPGA umfasst oder ist.

10. Flugzeug oder Raumfahrzeug, das ein Netzwerk nach einem der vorhergehenden Ansprüche umfasst.

11. Verfahren zum Konfigurieren des Netzwerks nach einem der Ansprüche 1 bis 9, wobei das Verfahren Folgendes umfasst:
- Hinzufügen einer weiteren Slave-Vorrichtung (3a, 3b, 3c) zu der Verkettungsanordnung an einer beliebigen Position in der Reihe von Slave-Vorrichtungen (3a, 3b, 3c),
- Verzögern der Ausgabe der Antwortdatenpakete (9) durch jede der Slave-Vorrichtungen (3a, 3b, 3c) um einen einstellbaren Verzögerungszeitraum (19), wobei die Verzögerung nicht auf Antwortdatenpakete (9) angewandt wird, die durch eine Slave-Vorrichtung (3a, 3b, 3c) auf ihrer zweiten Datenschnittstelle (5) von einer Signalabwärts-Slave-Vorrichtung (3a, 3b, 3c) empfangen und zu der ersten Datenschnittstelle (4) weitergeleitet werden, und
- für jede der Slave-Vorrichtungen (3a, 3b, 3c) Setzen des Verzögerungszeitraums (19) auf einen Wert abhängig von der relativen Position der jeweiligen Slave-Vorrichtung (3a, 3b, 3c) in der Verkettungsanordnung mit Bezug auf die übrigen Slave-Vorrichtungen (3a, 3b, 3c) der Verkettungsanordnung, dergestalt, dass der Verzögerungszeitraum (19) von Slave-Vorrichtung (3a, 3b, 3c) zu Slave-Vorrichtung (3a, 3b, 3c) beginnend von der ersten Slave-Vorrichtung (3a, 3b, 3c) und endend bei der letzten Slave-Vorrichtung (3a, 3b, 3c) kontinuierlich abnimmt.

## Revendications

1. Réseau pour un aéronef ou engin spatial comprenant :
un dispositif maître et une pluralité de dispositifs esclaves (3a, 3b, 3c) connectés en série dans un agencement en guirlande, dans lequel le dispositif maître (2) est connecté à un premier des dispositifs esclaves (3a, 3b, 3c) auxquels les dispositifs esclaves restants (3a, 3b, 3c) sont connectés en série jusqu'à un dernier des dispositifs esclaves (3a, 3b, 3c), et dans lequel chacun des dispositifs esclaves (3a, 3b, 3c) comporte un identifiant associé extrait d'une séquence ordonée prédéterminée d'identifiants et identifiant de manière univoque le dispositif esclave respectif (3a, 3b, 3c) parmi la pluralité de dispositifs esclaves (3a, 3b, 3c),
dans lequel le dispositif maître (2) est conçu pour transmettre périodiquement des paquets de données d'interrogation (8) dans une direction aval le long des séries de dispositifs esclaves (3a, 3b, 3c), chacun des paquets de données d'interrogation (8) comprenant un et un seul identifiant, dans lequel le dispositif maître (2) transmet les paquets de données d'interrogation (8) en séquences successives, chaque séquence de paquets de données d'interrogation (8) comprenant pour chacun des dispositifs esclaves (3a, 3b, 3c) un et un seul paquet de données d'interrogation (8), qui comprend l'identifiant du dispositif esclave respectif (3a, 3b, 3c), et chaque séquence de paquets de données d'interrogation (8) comprenant les paquets de données d'interrogation (8) dans l'ordre défini par la séquence prédéterminée d'identifiants, et
chacun des dispositifs esclaves (3a, 3b, 3c) comprend une première interface de données (4) au moyen de laquelle il est connecté au dispositif maître (2) ou à un dispositif esclave adjacent (3a, 3b, 3c) dans une direction amont, une seconde interface de données (5) au moyen de laquelle il est connecté à un dispositif esclave adjacent (3a, 3b, 3c) dans la direction aval, et une unité de traitement (6) connectée aux première et seconde interfaces de données (4, 5) et conçue pour
- comparer pour chaque paquet de données d'interrogation (8) reçu sur la première interface de données (4) l'identifiant du dispositif esclave respectif (3a, 3b, 3c) avec l'identifiant inclus dans le paquet de données d'interrogation (8) et émettre sur la première interface de données (4) un paquet de données de réponse (9) au dispositif maître (2) si les deux identifiants se correspondent, et transmettre le paquet de données d'interrogation (8) à la seconde interface (5) au moins si les deux identifiants ne se correspondent pas, et
- transmettre les paquets de données de réponse (9) reçus sur la seconde interface de données (5) à la première interface de données (4),
**caractérisé en ce que** l'unité de traitement (6) de chacun des dispositifs esclaves (3a, 3b, 3c) comprend un élément de temporisation réglable (7) qui est conçu pour retarder l'émission des paquets de données de réponse (9) d'une période de retard réglable (19), dans lequel le retard n'est pas appliqué aux paquets de données de réponse (9) reçus par un dispositif esclave (3a, 3b, 3c) sur sa seconde interface de données (5) à partir d'un dispositif esclave aval (3a, 3b, 3c) et retransmis à la première interface de données (4),
dans lequel, pour chacun des dispositifs esclaves (3a, 3b, 3c), la période de retard (19) est réglée sur une valeur dépendant de la position relative du dispositif esclave respectif (3a, 3b, 3c) dans l'agencement en guirlande par rapport aux dispositifs esclaves restants (3a, 3b, 3c) de l'agencement en guirlande, de telle sorte que la période de retard (19) décroît de manière continue d'un dispositif esclave (3a, 3b, 3c) à un autre dispositif esclave (3a, 3b, 3c) en partant du premier dispositif esclave (3a, 3b, 3c) et en terminant par le dernier dispositif esclave (3a, 3b, 3c).

2. Réseau selon la revendication 1, dans lequel l'élément de temporisation (7) de chacun des dispositifs esclaves (3a, 3b, 3c) comprend une mémoire tampon, dans lequel l'unité de traitement (6) est conçue pour enregistrer temporairement le paquet de données de réponse (9) dans la mémoire tampon pendant la période de retard respective (19), ou
l'élément de temporisation (7) de chacun des dispositifs esclaves (3a, 3b, 3c) est conçu pour retarder la génération du paquet de données de réponse (9) par l'unité de traitement (6) de la période de retard respective (19).

3. Réseau selon l'une quelconque des revendications précédentes, dans lequel l'unité de traitement (6) de chacun des dispositifs esclaves (3a, 3b, 3c) est conçue pour recevoir une mesure de la position relative du dispositif esclave respectif (3a, 3b, 3c) et pour déterminer et régler automatiquement la période de retard réglable (19) comme fonction prédéterminée de la mesure reçue.

4. Réseau selon la revendication 3, dans lequel l'unité de traitement (6) de chacun des dispositifs esclaves (3a, 3b, 3c) est conçue pour mesurer les périodes de temps entre l'émission des paquets de données d'interrogation (8) sur la seconde interface de données (5) et la réception des paquets de données de réponse correspondants (9), pour déterminer la période de temps maximale mesurée et pour définir automatiquement la période de retard réglable (19) sur la base du maximum déterminé.

5. Réseau selon la revendication 4, dans lequel l'unité de traitement (6) est conçue pour régler la période de retard réglable (19) sur la période de temps maximale déterminée.

6. Réseau selon l'une quelconque des revendications 3 à 5, dans lequel l'unité de traitement (6) de chacun des dispositifs esclaves (3a, 3b, 3c) est conçue pour comparer la période de retard déterminée (19) à une période de retard maximale prédéfinie et pour régler la période de retard réglable (19) sur la période de retard maximale prédéfinie si le nombre déterminé (19) dépasse la période de retard maximale prédéfinie.

7. Réseau selon l'une quelconque des revendications précédentes, dans lequel l'unité de traitement (6) de chacun des dispositifs esclaves (3a, 3b, 3c) est conçue pour mettre à zéro la période de retard (19) si elle est déterminée sur la base de la mesure selon laquelle le dispositif esclave (3a, 3b, 3c) est le dernier dispositif esclave (3a, 3b, 3c) de la série de dispositifs esclaves (3a, 3b, 3c).

8. Réseau selon l'une quelconque des revendications précédentes, dans lequel chaque séquence de paquets de données d'interrogation (8) comprend, à la fin ou au début de celle-ci, un paquet de données d'interrogation spécial (8) comprenant un identifiant prédéfini, qui est inclus dans la séquence d'identifiants et n'est associé à aucun des dispositifs esclaves (3a, 3b, 3c), et dans lequel l'unité de traitement (6) de chacun des dispositifs esclaves (3a, 3b, 3c) est conçue pour identifier les paquets de données d'interrogation spéciaux (8) lors de leur réception sur la première interface de données (4) et pour les retransmettre à la seconde interface de données (5).

9. Réseau selon l'une quelconque des revendications précédentes, dans lequel l'unité de traitement (6) de chacun des dispositifs esclaves (3a, 3b, 3c) comprend ou est un réseau de portes programmable sur le champ, FPGA (field programmable gate array).

10. Aéronef ou engin spatial comprenant un réseau selon l'une quelconque des revendications précédentes.

11. Procédé de configuration du réseau selon l'une quelconque des revendications 1 à 9, le procédé comprenant :
- l'ajout d'un autre dispositif esclave (3a, 3b, 3c) à l'agencement en guirlande en une position arbitraire dans la série de dispositifs esclaves (3a, 3b, 3c),
- le retard, par chacun des dispositifs esclaves (3a, 3b, 3c), de l'émission des paquets de données de réponse (9) par une période de retard réglable (19), dans lequel le retard n'est pas appliqué aux paquets de données de réponse (9) reçus par un dispositif esclave (3a, 3b, 3c) sur sa seconde interface de données (5) à partir d'un dispositif esclave aval (3a, 3b, 3c) et retransmis à la première interface de données (4), et
- le réglage, pour chacun des dispositifs esclaves (3a, 3b, 3c), de la période de retard (19) sur une valeur dépendant de la position relative du dispositif esclave respectif (3a, 3b, 3c) dans l'agencement en guirlande par rapport aux dispositifs esclaves restants (3a, 3b, 3c) de l'agencement en guirlande, de telle sorte que la période de retard (19) décroît de manière continue d'un dispositif esclave (3a, 3b, 3c) à un autre dispositif esclave (3a, 3b, 3c) en partant du premier dispositif esclave (3a, 3b, 3c) et en terminant par le dernier dispositif esclave (3a, 3b, 3c).
